# EUROPEAN PATENT APPLICATION

(11) **EP 3 135 836 A1**
(43) Date of publication of application: **01.03.2017**
(21) Application number: 15460047.2
(22) Date of filing: 22.08.2015
(51) Int. Cl.: E04B 1/76, C04B 28/14, C04B 16/08, E04F 21/12

(54) **A METHOD AND INSULATING MATERIAL TO REDUCE ENERGY CONSUMPTION OF BUILDINGS' HEATING WITH WALLS CONSTRUCTED WITH HIGH CAPACITY OF HEAT ACCUMULATING IN DAILY CIRCLE**

(71) Applicant: TISOFT Wojciech Jedrzejewski, 88-100 Inowroclaw (PL)
(72) Inventor: TISOFT Wojciech Jedrzejewski, 88-100 Inowroclaw (PL)
(74) Representative: Jankowski, Piotr

(57) **Abstract**

A method and insulating material to reduce energy consumption of buildings' heating with walls constructed with high capacity of heat accumulating in daily circle, characterized in that the insulating layer is placed directly on the partition walls from the inner side, wherein the layer in the form of a mass of plaster having a thickness of 2 cm is applied by spraying and then leveled, next a glass fiber mesh is stuck and the finishing layer is applied in the form of gypsum plaster. That it consists of 70 - 80% of styrofoam pellets of 2 mm granulation and insulation propertied λ= 0,038 W/ (m·K) and 20 - 30% of gypsum plaster 3 having a water content of 35%.

## Description

A method and insulating material to reduce energy consumption of buildings' heating with walls constructed with high capacity of heat accumulating in daily circle.

The subject of the invention is method and insulating material to reduce energy consumption of buildings' heating with walls constructed with high capacity of heat accumulating in daily circle, in older buildings built using the traditional method of isolating the internal walls with insulation materials in the form of a plaster mass and insulation material. For the traditional method we mean a way of building using ceramic materials, ie. solid bricks with a density of 1850 kg / m3, externally insulated or non-insulated. In Poland 83.2% of the buildings are the buildings built before 1989. These types of buildings are constructed using traditional methods. Their real need for usable energy for the installation of gas within the limits of 160 - 400 kWh / (m2 * s).

The method and the material according to the invention are mainly applicable to rooms where the temperature required varies periodically throughout the day. (e.g. when the room is heated for 6 hours per day). Presently when the room is chilled and heating is switched on, heat is absorbed from the air by the partition walls of ceramic materials such as solid brick with a coefficient of thermal capacity equal to 73.5 MJ / K. The result is a slow increase of temperature in the room to the set, comfortable value. Often, during use of the room temperature does not have time to achieve a predetermined value. After a lifetime of space heating is turned off. After use the room heating is switched off. Then the partition walls cool down by giving heat to unused rooms.

The problem is the plurality of partition walls with a high heat accumulation ratio constructed of ceramic materials such as solid brick.

The solution is to reduce the amount of energy absorbed by the partition walls at the time of room heating by isolating partitions inside, in order to isolate the air inside the room from the surface of the partitions. The result is reduced energy demand utilized to heat the indoor air heated in a discontinuous manner. The time of heating the air is further shortened by the application of air heating.

The point of the invention is the use of a special insulating layer which is placed directly on the partition walls of the ceramic material on the inside. The insulation layer is in the form of plaster mass or the composite material applied to the partition walls from the inside, wherein the insulation layer in the form of a plaster mass is composed of a mixture of styrofoam granules and gypsum plaster and is applied to the wall using the spray and compensated by blurring.

Then a fiberglass mesh is glued to the insulating layer and finishing plaster is applied, eg. gypsum. Optionally the insulating layer is formed of insulating layered material directly glued to the wall, consisting of a layer of styrofoam, a reinforced aluminum foil and fiberglass mesh. These layers are joined together by adhesive. Sequentially the finishing plaster is applied to fiberglass mesh eg. gypsum. The foil is glued to the partitions by adhesives for styrofoam.

In the method according to the invention, the air reaches and maintains predetermined, comfortable for human temperature. Heating source provides energy by heating the air only, so that perceptible temperature in a room increases very quickly. Thanks to the resisting-insulating layer placed on a partition from the inner side, the air is isolated from the partition so that it prevents the air in a room from cooling. Said invention together with use of modern air heat exchangers reduces heating time and supply for energy needed for periodic heating the air in a room of a building built by a traditional method.

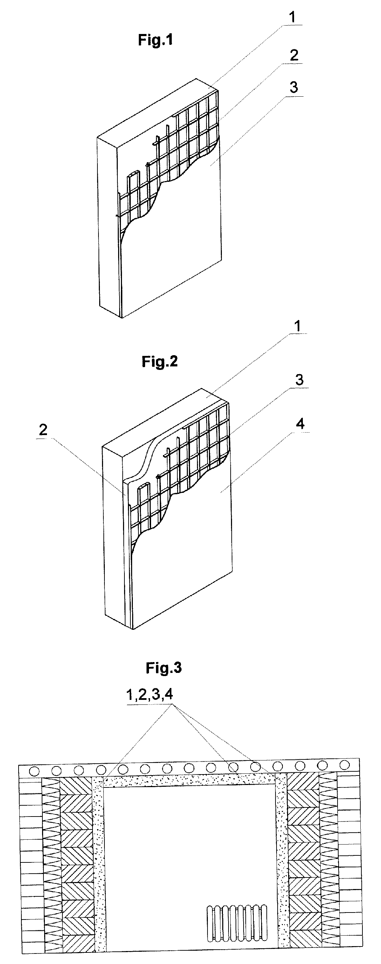

The invention is show in the attached illustrative material on which fig.1, 2 shows thermal insulation layers, fig 3 presents location of insulating layers on building partitions.

The insulating layer consists of a mass of plaster 1, grid 2 and a plaster 3. In the second embodiment, the insulating layer consists of polystyrene foam 1, aluminum foil 2, fiberglass mesh 3, plaster 4.

The invention is show closer in embodiments

### Example 1

The insulation layer is placed directly on partitions from the inner side, however, the insulation layer is in the form of the plaster mass 1 consisting of a mixture of 70 - 80% of styrofoam pellets of 2 mm granulation and insulation properties = 0.038 W / (m • K), and 20 - 30% of gypsum plaster 3 having a water content of 35%. Ingredients are mixed by a mechanical stirrer, then a layer of thickness 2 cm is placed directly on a wall from the inner side by a spray method and next it is leveled by blurring. After that, a fiberglass mesh 3 is stuck on and a finishing layer 3 of gypsum plaster is put on the insulating layer.

### Example 2

The layered insulating material consists of a layer of an expanded polystyrene 1 of 2 mm thickness and heat transfer coefficient λ = 0.038 W / (m • K), and a reinforced aluminum foil 2, which consists of aluminum foil with a thickness of 20µm, the glass sheet 2x2 Fd / cm, a layer of PE of weight of 22g / m2 and a longitudinal tensile strength of 250N / 50mm and fiberglass mesh 3. These layers are bonded together with adhesive mortar for polystyrene. Insulating layer is adhered to the partition with a mortar to polystyrene. Then, a finishing gypsum plaster 4 is applied to the fiberglass mesh.

## Claims

1. A method of reducing energy consumption for heating buildings constructed in the wall technology with high heat storage capacity of a daily cycle, **characterized in that** the insulating layer is placed directly on the partition walls from the inner side, wherein the layer in the form of a mass of plaster having a thickness of 2 cm is applied by spraying and then leveled, next a glass fiber mesh is stuck and the finishing layer is applied in the form of gypsum plaster.

2. The insulating material for reducing the energy consumption for heating buildings constructed in the wall technology with high heat storage capacity of a daily cycle, **characterized in that** it consists of 70 - 80% of styrofoam pellets of 2 mm granulation and insulation properties A = 0,038 W/ (m·K) and 20 - 30% of gypsum plaster 3 having a water content of 35%.

3. The insulation material for reducing the energy consumption for heating buildings constructed in the wall technology with high heat storage capacity of a daily cycle, **characterized in that** it consists of a layer of polystyrene having a thickness of 2 mm and a heat transfer coefficient A = 0.038 W / (m • K) and a reinforced aluminum foil consisting of an aluminum foil having a thickness of 20µm, the glass sheet 2x2 Fd / cm, PE layer with a weight of 22 g / m2 and longitudinal tensile strength of 250 N / 50mm, and the glass fiber mesh, wherein the layers are connected with each other with an adhesive.
